**Europäisches Patentamt**

**European Patent Office**

**Office européen des brevets**

(19)

(11) Veröffentlichungsnummer: **0 090 190**
**A1**

(12) # EUROPÄISCHE PATENTANMELDUNG

(21) Anmeldenummer: **83102043.3**

(22) Anmeldetag: **03.03.83**

(51) Int. Cl.³: **G 01 N 27/84**

(30) Priorität: **22.03.82 CH 1767/82**
**18.09.82 DE 3234616**

(43) Veröffentlichungstag der Anmeldung: **05.10.83**
**Patentblatt 83/40**

(84) Benannte Vertragsstaaten: **AT BE CH DE FR GB IT LI LU NL SE**

(71) Anmelder: **Mecapec S.A., Postfach, CH-8716 Schmerikon (CH)**

(72) Erfinder: **Seiler, Daniel, St. Gallerstrasse 131, CH-8645 Jona (CH)**
Erfinder: **Meili, Ernst, Unterbühienstrasse 19, CH-8610 Uster (CH)**

(74) Vertreter: **Rottmann, Maximilian, Hug Interlizenz AG alte Zürcherstrasse 49, CH-8903 Birmensdorf/ZH (CH)**

(54) Verfahren und Einrichtung zur magnetischen Materialfehlerdetektion.

(57) Das Verfahren arbeitet mit Markierung der fehlerbedingten Streuflüsse durch Trockenmagnetpulver, wobei im Gegensatz zu der hier üblichen Stromdurchflutungsmagnetisierung mit ihren Kontaktierungsproblemen eine Jochmagnetisierung mit quer zur Stablängsrichtung und parallel zur Werkstückoberfläche sowie oberflächennah innerhalb des Werkstücks verlaufendem Magnetfeld angewendet wird. Die Markierungen können ferner lage- oder formgerecht auf ein Abbildungsmedium übertragen werden, insbesondere durch fotoelektrische Abtastung und datentechnische Speicherung der Fehlersignale. Nach der Abbildung kann das Markiermittel entfernt werden, was die Verwendung von bindemittel- oder fixiermittelfreien Markiermitteln ermöglicht. In Abhängigkeit von der Fehlerabbildung kann dann eine gesteuerte Sekundärmarkierung der Fehlerstellen vorgenommen werden, ohne Entfernung der ersten Fehlermarkierung gegebenenfalls auch eine selektive Fixierung mit entsprechender Einsparung an Fixiermittel.

Die Einrichtung umfasst eine Magnetisierungs-Jochanordnung (J, MP) mit Wechselfluß-Erregereinrichtung sowie eine Repetier-Durchlaufeinrichtung mit Drehvorrichtung zur Erfassung verschiedener Umfangsbereiche des Werkstückes. Stattdessen kommt eine Folgeanordnung mehrerer Behandlungsstationen (I, II) mit gegeneinander verdrehten Markier- und Detektionseinrichtungen in Betracht.

0090190

MECAPEC SA, 8716 Schmerikon

# Verfahren und Einrichtung zur magnetischen Marerialfehlerdetektion

Die Erfindung bezieht sich auf ein Verfahren zur magnetischen Materialfehlerdetektion sowie auf eine Einrichtung zur Durchführung eines solchen Verfahrens.

Die vorliegend vorausgesetzte Methode der Materialfehlerdetektion beruht auf der Markierung von im Bereich oberflächennaher Materialfehler von magnetisierbaren Werkstoffen austretenden Streufeldern, insbesondere mit magnetpulverhaltigen Markiermitteln. Dabei wird im Rahmen der Erfindung bevorzugt trockenmagnetpulverhaltiges Markiermittel verwendet, welches den Vorteil einer einfachen Handhabung und einer vergleichsweise schnellen Markierung von rissförmigen Fehlern sowie denjenigen der Differenzierungsfähigkeit hinsichtlich der Fehlertiefe durch risstiefenabhängige Markierungsbreite aufweist.

Die bekannte Fehlermarkierung mit Trockenmagnetpulver arbeitet mit der Erzeugung eines oberflächennahen und oberflächenparallelen inneren Magnetfeldes durch Wechselmagnetisierung unter Ausnutzung des Skineffektes sowie mit zunächst gleichmässiger Markierpulverbeschichtung der Prüfstückoberfläche und mit nachfolgender Selektion des im Streufeldbereich anhaftenden Pulvers, im allgemeinen durch Beblasen der Prüfstückoberfläche in geeigneter Richtung.

Zur Detektion der bei stabförmigen Prüfstücken, insbesondere Walzknüppeln, am häufigsten auftretenden Längsrisse wird üblicherweise ein zirkulares, quer zur Stablängsachse verlaufenden Magnetfeld durch Längs-Wechselstromdurchflutung des Stabes erzeugt. Dies erfordert für einen Durchlaufbetrieb eine hoch beanspruchte galvanische Kontaktierung der bewegten Knüppel. Diese bereitet vor allem bei verzunderten Warmwalzknüppeln Probleme bzw. erfordert Aufwand für die einwandfreie Kontaktierung.

Aus der US-PS 3.763.423 ist es bekannt, eine oberflächennahe sowie quer zur Längsrichtung eines stabförmigen Prüfstückes gerichtete Magnetisierung mittels einer elektromagnetsisch erregten Magnetjochanordnung zu erzeugen. Diese bekannte Verfahrensweise bezieht sich auf das sogenannte "Nassfluxverfahren", bei dem in einer Trägerflüssigkeit suspendiertes Magnetpulver auf die Prüfstückoberfläche gesprüht oder gespült wird. Dieses bekannte Verfahren ist zwar hinsichtlich der zur Fehlerdetektion grundsätzlich ausreichenden Magnetfeldintensität relativ unkritisch und erlaubt die Anwendung vergleichsweise schwacher Felder, ist andererseits jedoch mit Nachteilen hinsichtlich der Handhabung des flüssigen Markiermittels behaftet und lässt hinsichtlich der Risstiefen-Diskriminierung praktische Bedürfnisse offen. Das bekannte Verfahren lässt eine rasche Pulveransammlung an den Fehlerstellen nicht zu und erschwert die oft erwünschte Unterdrückung von sehr feiner Fehlermarkierungen.

Weiterhin ist es aus der DE-PS23 36 677 bekannt, mittels einer, ein stabförmiges Prüfstück umgreifenden Kreuzspulanordnung eine oberflächennahe Drehfeldmagnetisierung zum Zweck der Rissprüfung zu erzeugen, wobei eine möglichst genau zirkulare, d.h. in allen Tangentialrichtungen der Prüfstückoberfläche möglichst übereinstimmende Magnetfeldamplitude, angestrebt wird. Diese Verfahrensweise gestaltet sich wegen der letztgenannten Anforderung einerseits hinsichtlich der ganauen Faseneinstellung der Erregerströme und andererseits wegen des komplizierten Spulenaufbaus recht aufwendig, was innerhalb des vorherrschenden Anwendungsbereiches,nämlich der Längsrissdetektion in langgestreckten Prüfstücken, nicht gerechtfertigt ist.

Eine erste Aufgabe der Erfindung ist daher die Schaffung eines für den Durchlaufbetrieb geeigneten Detektionsverfahrens

0090190

ohne die Notwendigkeit einer galvanischen Prüfstück-Kontaktierung, welches die Vorteile der Trockenmagnetpulverdetektion aufrechterhält. Die Lösung dieser Aufgabe kennzeichnet sich durch die Merkmalskombination des Anspruchs 1. Dieser Lösung liegt das überraschende Erfahrungsergebnis zugrunde, wonach die Joch- bzw. Induktions-Quermagnetisierung auch für die Trockenmagnetpulver-Querrissdetektion verwendbar ist.

Eine weiterführende Erfindungsaufgabe richtet sich auf die Verbesserung der Auswertbarkeit bzw. der Herstellung und Eignung

von Trockenpulvermarkierungen für die weitere Auswertung, insbesondere die visuelle oder optisch-maschinelle bzw. datengesteuerte Auswertung solcher Markierungen für Zwecke der Fehlerbeseitigung, Sortierung oder Protokollierung bzw. sonstiger Handhabungssteuerungen. Die Lösung dieser Aufgabe kennzeichnet sich durch die Merkmalskombination des Anspruchs 4, wobei insbesondere auch eine Jochmagnetisierung mit Erzeugung von Trockenmagnetpulvermarkierungen gemäss Anspruch 1 angewendet werden kann.

Die Uebertragung der Fehlerlage bzw. Fehlerform auf ein Abbildungsmedium erfolgt mit besonderem Vorteil gemäss den Merkmalen der Ansprüche 5 und/oder 6 auf fotoelektrischem oder fotografischem Wege bzw. mit Erzeugung von elektrischen Datensignalen, die für die erwähnten Steuerungszwecke geeignet sind. Vor allem vorteilhaft ist in diesem Zusammenhang die Möglichkeit, die Pulvermarkierungen - im Gegensatz zur üblichen Technik - vollständig von der Werkstückoberfläche entfernen zu können, womit insbesondere auch die Notwendigkeit einer Fixierung der Markierungen entfällt. Damit ergibt sich weiterhin die wertvolle Möglichkeit, ein binde- bzw. fixiermittelfreies und insbesondere hochtemperaturbeständiges Markierpulver gemäss den Ansprüchen 8 bzw. 9 anzuwenden. Damit eröffnet sich insbesondere auch die Anwendung des Trockenmagnetpulververfahrens für Warmwalzgut gemäss Anspruch 10.

0090190

Eine Weiterführung der Erfindungsaufgabe richtet sich sodann auf die Erreichung von dauerhaften und für die Auswertung im rauhen Betrieb geeigneten Markierungen, ohne einerseits auf die Vorteile des Trockenmagnetpulververfahrens verzichten zu müssen und ohne andererseits dessen Nachteile hinsichtlich eines im allgemeinen als Schadstoff wirkenden Fixiermittels in Kauf nehmen zu müssen. Die Lösung dieser Aufgabe kennzeichnet sich durch die Merkmale des Anspruchs 11. Solche Sekundärmarkierungen eröffnen unabhängig von den Gegebenheiten der magnetischen Fehlerdetektion und der entsprechenden Markier- bzw. Primärmarkiermittel eine Vielfalt von für verschiedene Anwendungsfälle vorteilhaften Abtast-, Auswerte- und Steuerverfahren, insbesondere z.B. auch mit Markierung durch energiereiche, z.B. ionisierende Strahlungsträger, sowie bei manueller Fehlerbeseitigung eine verbesserte Sichtbarkeit des Fehlerbereiches. Auch für eine Sekundärmarkierungsabtastung mittels kurzwelliger elektromagnetischer Strahlung und mit kohärenter Strahlung (Laser) eröffnen solche Sekundärmarkierungsverfahren neue und vorteilhafte Anpassungsmöglichkeiten.

Besonders vorteilhaft hinsichtlich Einfachheit und geringer Umweltbelastung ist ferner die Verwendung von wasser- und/oder äthanolhaltigen Markierfarben. Durch Trocknung mit forcierter Erwärmung gemäss Anspruch 14 lassen sich auch besonders kurze Durchlaufzeitanteile für die Sekundärmarkierung erreichen.

Weiterhin ist die Möglichkeit als vorteilhaft hervorzuheben, das Primärmarkiermittel bereits innerhalb der Prüfeinrichtung vollständig von der Werkstückoberfläche entfernen und im Kreislauf zur Dauerverwendung zurückführen zu können.

Die Erfindungsaufgabe erstreckt sich weiterhin auf die Ausgestaltung des Magnetpulver-Detektionsverfahrens, und zwar
nicht ausschliesslich, aber bevorzugt des Trockenmagnetpulververfahrens, mit Fixierung der primären Markierung, jedoch unter weitgehender Rationalisierung des hierfür erforderlichen Fixiermittelaufwandes. Die Lösung dieser Aufgabe
kennzeichnet sich durch die Merkmale des Anspruchs 17.

Noch weiter erstreckt sich die Erfindungsaufgabe auf die Vereinfachung des Fixierens von Streufluss-Markiermitteln allgemein. Die Lösung dieser Aufgabe, die sich insbesondere auch
auf Trockenmagnetpulver erstreckt, kennzeichnet sich durch
die Merkmale des Anspruchs 19. Eine solche thermische Fixierung durch Verflüssigung (bei Verwendung eines Granulat-Markiermittels) bzw. durch Verfestigung (bei Verwendung eines
flüssigen oder viskosen Markiermittels) hat grundsätzlich
den Vorteil der Freiheit von belastenden Fixiermitteln und
der einfachen Verfahrensdurchführung mit Aufheizung. Besonders vorteilhaft kann sogar die Eigenwärme von Warmwalzgut
oder dergl. für die Fixierung ausgenutzt werden, wenn nur
die primäre Beschichtung und Selektion der Streuflussbereiche
rasch genug erfolgen kann, um eine vorzeitige Fixierung zu
vermeiden.

Vor allem ist hervorzuheben, dass sich die thermische Markiermittelfixierung auch für eine örtlich selektiv gesteuerte Durchführung in Abhängigkeit von aufgenommenen Fehlerlage- bzw. Fehlerformdaten eignet, wie dies im Anspruch 20 gekennzeichnet ist.

Im übrigen kann erfindungsgemäss nach den Merkmalen des Anspruchs 21 auch eine überdeckende Primär- und Sekundärmarkierung angewendet werden, insbesondere auch gemäss der Ausgestaltung nach Anspruch 22. Eine solche überdeckende Doppelmarkierung hat den Vorteil, dass die flächenhaft ausgedehntere Sekundärmarkierung eine Groblokalisierung und sodann die feinere Primärmarkierung eine genauere Auswertung der Fehlerdetektion ermöglicht.

Weitere Merkmale und Vorteile der Erfindung werden unter Bezunahme auf die in den Zeichnungen schematisch dargestellten Ausführungsbeispiele erläutert.

Hierhin zeigt:

Fig. 1    eine schematische Seiten-Gesamtansicht einer Anlage
          zur Trockenmagnetpulver-Rissprüfung für langge-
          streckte Werkstücke,

- 9 -                                    0090190

Fig. 1a    eine schematische Blockdarstellung der innerhalb dieser Anlage vorhandenen, in Aufeinanderfolge wirksam werdenden Arbeitsstationen,


Fig. 2     eine Joch-Magnetisierungsstation mit Magnetisierungsrichtung quer zur Prüfstückachse sowie mit zusätzlicher Längsmagnetisierung,


Fig. 3     eine weitere Ausführung einer erfindungsgemässen Trockenmagnetpulver-Rissprüfanlage mit zwei aufeinanderfolgend angeordneten Arbeitsbereichen, wiederum

           in schematischer Gesamt-Seitenansicht,


Fig. 3a    ein entsprechendes Arbeitsstationsschema ähnlich der

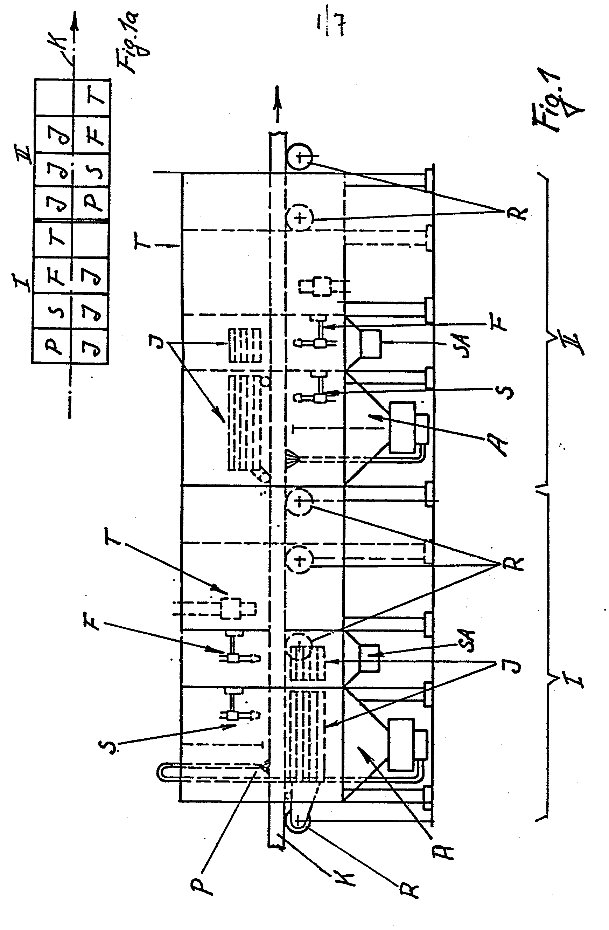

           Darstellung in Fig. 1a,


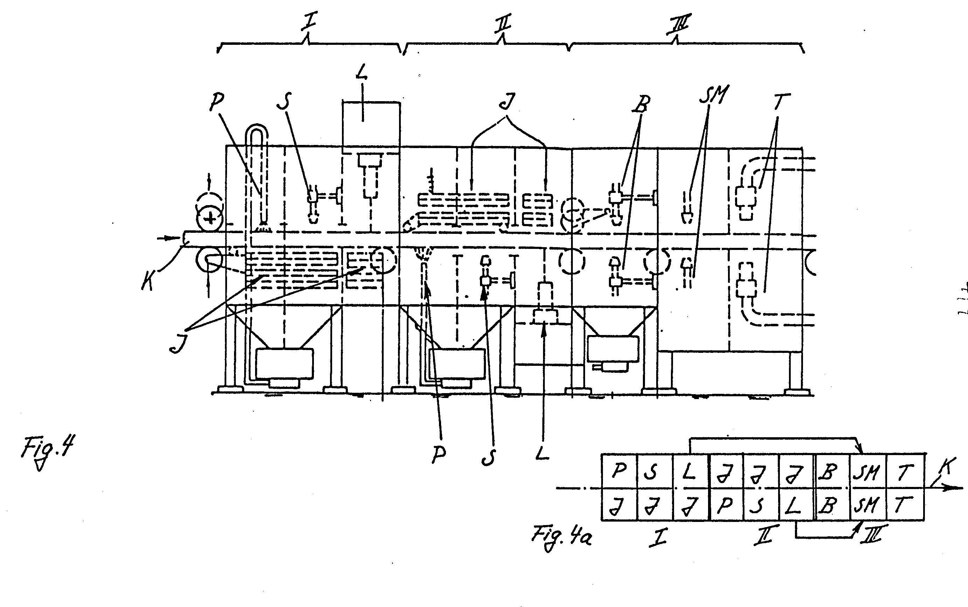

Fig. 4     eine abermals abgewandelte Ausführung einer Trockenmagnetpulver-Rissprüfanlage, und zwar mit drei aufeinanderfolgenden Arbeitsbereichen, wiederum in

           schematischer Gesamt-Seitenansicht,


Fig. 4a    das zugehörige Arbeitsstationsschema ähnlich Fig. 1a,


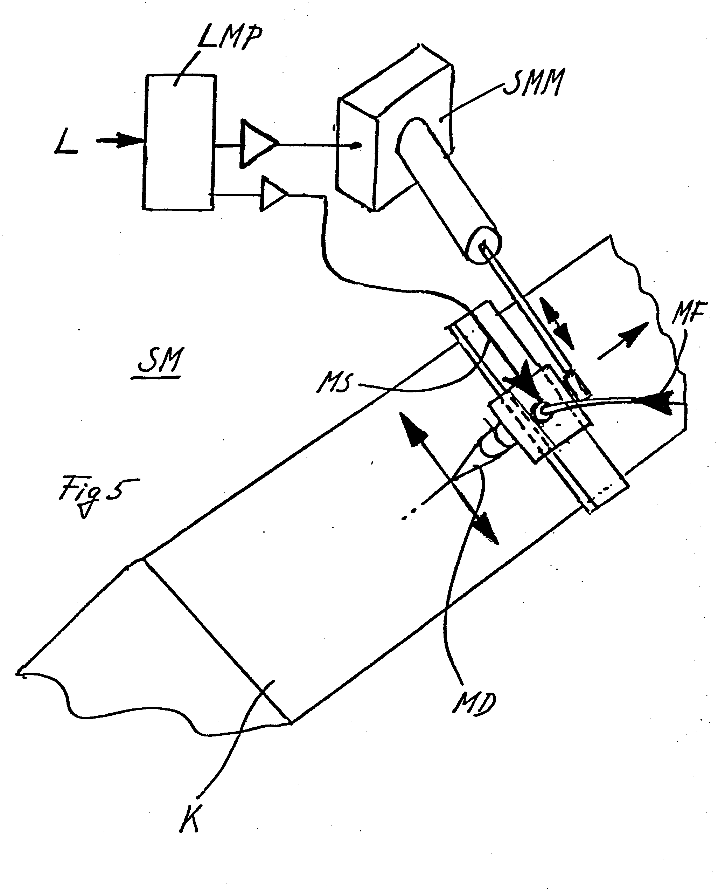

Fig. 5     eine schematisch-perspektivische Darstellung einer datengesteuerten Sekundär-Rissmarkierungsstation, verwendbar in den vorstehend erwähnten Ausführungsformen erfindungsgemässer Rissprüfanlagen,

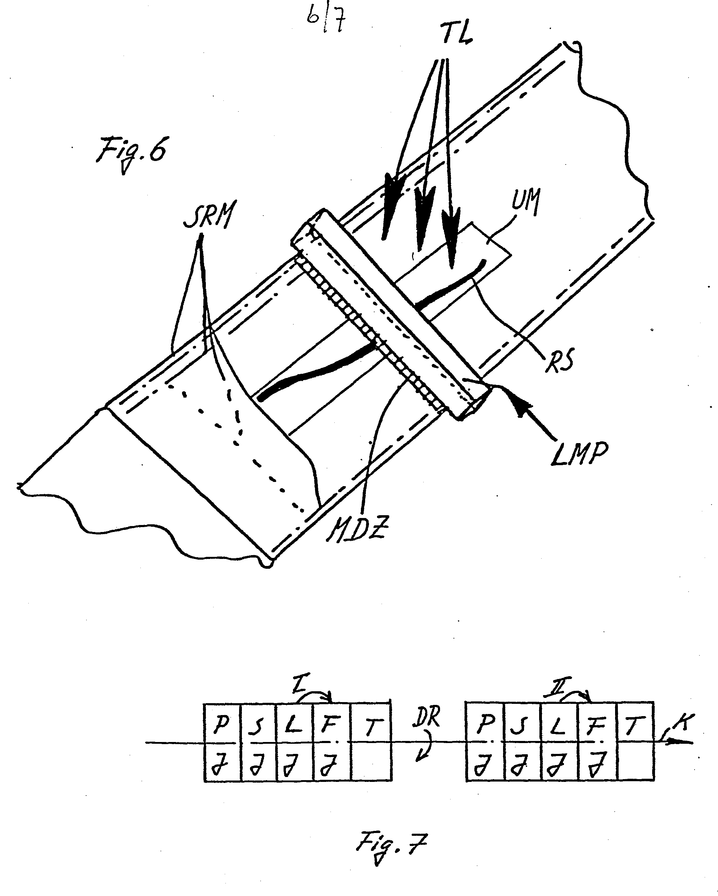

Fig. 6      eine abgewandelte Ausführungsform einer Sekundär-

            markierungsstation, wiederum in schematisch-perspek-

            tivischer Darstellung,


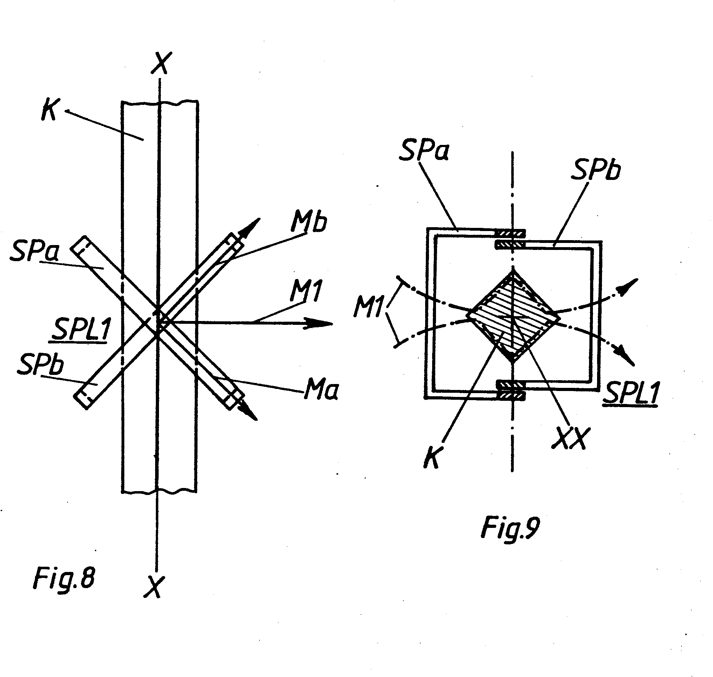

Fig. 7      ein weiteres Arbeitsstationsschema zur Darstellung eines besonderen Arbeitsverfahrens zur Durchlauf-Rissprüfung an langgestreckten Prüfstücken,


Fig. 8      eine Induktionsspulenanordnung zur Erzeugung einer stationären Wechselfeld-Quermagnetisierung für Zwecke der Längsrissdetektion an langgestreckten Werkstücken, und zwar in schematischer Ansicht quer zur Prüfstücklängsachse,


Fig. 9      eine schematische Querschnittdarstellung bezüglich der Prüfstücklängsachse für die Einrichtung nach Fig. 8 und


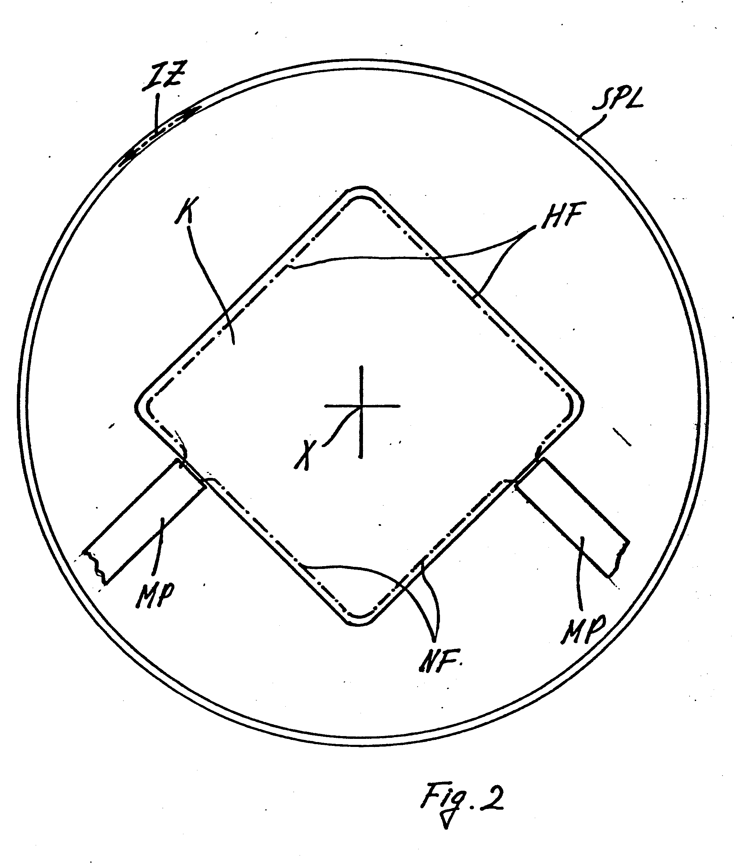

Fig. 1 zeigt eine Trockenmagnetpulver-Rissprüfanlage zur Durchlauf-Fehlerdetektion an Walzknüppeln K, die über Leit- und Transportrollen R laufen. Die Anlage arbeitet mit Teilumfangsdetektion
in je einem Einrichtungs- bzw. Verfahrensbereich I bzw. II. Die
Magnetisierungs-, Bepulverungs-, Blas-Selektions-, Fixier- und
Trocknungsstationen P, S, F und T dieser Bereiche sind bezüglich
der Stablängsachse X (siehe Fig. 2) um 180° verdreht, so dass sich in einem Durchlauf eine vollständige Fehlerdetektion auf dem gesamten Werkstückumfang ergibt.

Das räumliche Durchlauf-Anordnungs- und Arbeitsschema ergibt sich hierzu aus Fig. la. Bepulverung, Blas-Selektion und Fixierung erfolgen unter der Wirkung einer Jochmagnetisierungsanordnung J, die ebenfalls in beiden Bereichen I und II um 180$^{\circ}$ verdreht angeordnet ist. Das überschüssige Trockenmagnetpulver wird innerhalb der Bepulverungsstation P und der Selektionsstation S in einer Sammelvorrichtung A aufgefangen, während das überschüssige Fixiermittel in der Fixierstation einer Sammelvorrichtung SA zugeführt wird. Die Markierungen werden sodann in einer Trockenstation T verfestigt.

Fig. 2 zeigt die oberflächennahe Quermagnetisierung des Knüppels K mittels einer Magnetjochanordnung MP zur Erzeugung eines Hauptflusses HF, der die jeweils zu prüfende Umfangsseite des Knüppels einschliesslich der Grenzkanten (hier die beiden horizontal in einer Ebene liegenden Diagonalkanten) umgreift und daher eine vollständige Fehlermarkierung einschliesslich eines Umfangs-Ueberlappungsbereiches zur Unterseite hin ermöglicht. Der unvermeidliche Nebenfluss NF wird beim betreffenden Durchlauf jeweils nicht genutzt. Für Zwecke einer gleichzeitigen Quer- oder Schrägrissdetektion ist noch eine Längsmagnetisierung mit Hüllspule SPL und zugehöriger Wechselstromdurchflutung IZ vorgesehen.

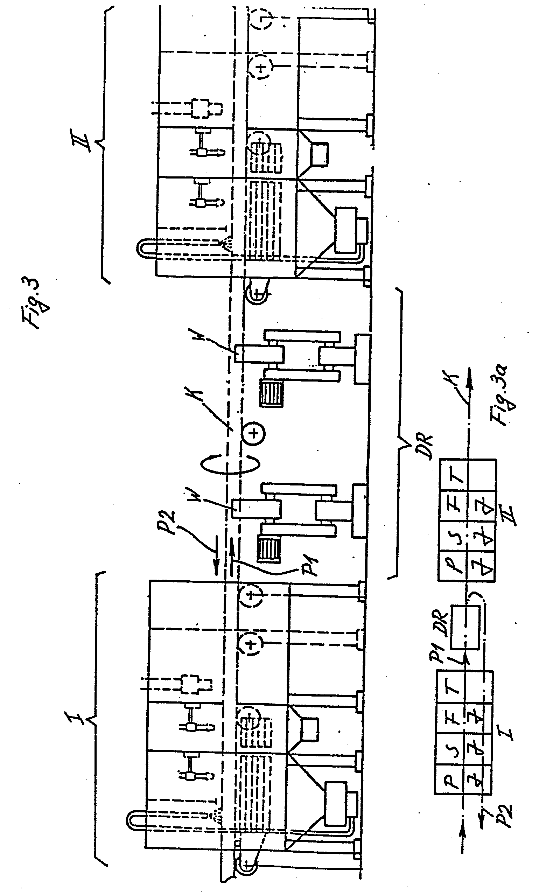

Fig. 3 zeigt zwei Anlagen- bzw. Arbeitsbereiche I und II entsprechend Fig. 1, wobei jedoch beide bezüglich der Stablängsachse die gleiche Winkelorientierung aufweisen. Statt einer gegensei-

0090190

tigen Verdrehung dieser Bereiche ist zwischen beiden eine Drehstation DR mit Wenderollen W zur Verdrehung des durchlaufenden Stabes vorgesehen. Selbstverständlich muss hierfür der Abstand der Bereiche I und II im Hinblick auf die Stablänge ausreichend gross sein. Statt einer solchen Folgeanordnung kann auch ein einziger Anlagen- bzw. Arbeitsbereich mit Drehvorrichtung und (nicht näher dargestellter, an sich üblicher) Durchlauf-Umkehrvorrichtung vorgesehen werden. Mit aufeinanderfolgenden Durch-läufen gemäss Pfeilen P1 und P2 ergibt sich dann ebenfalls eine vollständige Umfangsprüfung, allerdings mit geringerer Durchsatzleistung. Das Durchlauf-Arbeitsschema ergibt sich hierzu aus Fig. 3a.

Fig. 4 mit Durchlauf-Arbeitsschema gemäss Fig. 4a zeigt eine Gesamtanlage mit aufeinanderfolgenden Anlagen bzw. Arbeitsbereichen I und II zur Erzeugung von ober- und unterseitigen Primärmarkierungen sowie mit nachfolgendem Bereich III zur Erzeugung entsprechender Sekundärmarkierungen. Die Bereiche I und II entsprechen in ihrem Aufbau teilweise Fig. 1, wobei jedoch an die Stelle von Fixier- und Trockenstation F bzw. T eine Primärmarkier-Lesestation L zur elektro-optischen Umsetzung in datentechnisch verarbeitbare Fehlersignale tritt. Diese Lesestationen sind z.B. von an sich üblichem Aufbau, z.B. unter Verwendung einer Abtast-Fernsehkamera mit nachgeordnetem Datenprozessor, und bedürfen keiner näheren Erläuterung.

Der Sekundärmarkierbereich III umfasst eine Blasstation B zur vollständigen Entfernung des Primärmarkiermittels, das keiner Fixierung unterzogen wurde. Eine Sekundärmarkierstation SM wird in nicht näher dargestellter Weise von den Lesestationen L aus zur Aufbringung der bleibenden Sekundärmarkierungen gesteuert, worauf sich eine Trockenstation T anschliesst.

Fig.5 zeigt den Aufbau einer Sekundärmarkierstation SM mit Lese- und Markierprozessor LMP sowie nachgeordnetem Markier-Stellmotor SMM und Markierfarb-Stellglied MS. Der Stellmotor SMM bewegt eine entsprechend quer zur Stablängsrichtung verschiebbar gelagerte Markierdüse MD nach Art einer Zeilen-Abtastbewegung periodisch in beiden Richtungen, so dass vom Stellglied MS auf dem in Pfeilrichtung durchlaufenden Knüppel K eine lage- und formgerechte Fehlermarkierung aufgebracht wird. Dazu erhält die Markierdüse jeweils bei einem Querdurchlauf an der Fehlerstelle einen Markierbefehl.

Bei der Alternativausführung nach Fig.6 ist eine zeilenförmige Markierdüsenanordnung MDZ quer über den Küppel angeordnet (jeweils für eine Umfangsseite) und erzeugt jeweils auf den nebeneinanderliegenden Markierspuren SRM in Abhängigkeit vom Ausgang des Lese-Markierprozessors LMP fehlerkonforme Sekundärmarkierungen, die beispielsweise insgesamt eine Ueberdeckungssekundärmarkierung UM in geometrisch vorgegebener Ausweitung einer genaueren Primär-Rissmarkierung RS ergeben. Ein anschliessend zugeführter Trockenluftstrom TL verfestigt die Sekundärmarkierung.

- 14 -                                    0090190

Es versteht sich, dass koordinaten- oder linienrasterförmig steuerbare Markiereinrichtungen nach Art von Fig. 5 und 6 grundsätzlich auch für Zwecke einer örtlich selektiv gesteuerten Fixierung von Streuflussmarkierungen verwendet werden können.

Fig. 7 zeigt ein entsprechendes Durchlauf-Arbeitsschema für zwei Folgebereiche I und II nach Art von Fig 3 bzw. 3a, wobei jedoch zwischen Selektion S und (nun selektiver) Fixierung eine Lesestation L eingefügt ist. Letztere steuert, wie schematisch durch Wirkverbindungspfeile angedeutet, die nachfolgende Fixierstation, z.B. ähnlich Fig. 5 oder 6, wobei anstelle der Markierdüsen entsprechende Fixierdüsen treten, die ein geeignetes Fixiermittel gesteuert abgeben. Ebenso kann ersichtlich anstelle einer Fixierdüse eine konzentriert wirkende Heizvorrichtung treten, etwa ein geeignet fokussierter, trägheitsarm steuerbarer Wärmestrahler.

Die Magnetisierungsvorrichtung nach Fig. 8 besteht im wesentlichen aus einer einfachen Kreuzspulenanordnung, welche den Knüppel K umgreift, deren beide Einzelspulen SPa und SPb jedoch im Gegensatz zu bekannten Einrichtungen mit gleichphasigen Erreger-Wechselströmen in der Weise beaufschlagt werden, dass sich jeweils zu einer Seite der Prüfstücklängsachse XX gerichtete Wechselmagnetfeld-Vektoren Ma bzw. Mb ergeben. Damit ergibt sich ein resultierendes Quer-Wechselmagnetfeld gemäss Vektor M 1, welches im wesentlichen quer zur Prüfstücklängsachse XX gerichtet ist. Mit einer solchen vorteilhaft einfachen Spulenanordnung und mit entsprechend einfacher, gleichphasiger

- 15 -  0090190

Wechselstromerregung der beiden Einzelspulen lässt sich somit ein für Zwecke der Längsrissdetektion ausreichendes Oberflächenfeld erzeugen. Wie aus Fig. 9 hervorgeht, verläuft das Feld M1

jeweils im Bereich zweier diametraler Prüfstück-Längskanten mehr oder weniger in Normalrichtung zur Prüfstückoberfläche, zwischen diesen beiden Kantenbereichen jedoch im wesentlichen parallel nahe der Prüfstückoberfläche. Damit lässt sich in einem Durchlauf die Ober- und Unterseite des Prüfstücks untersuchen. Für die Untersuchung der Prüfstück-Längskantenbereiche, in denen das Magnetfeld bei der gezeigten Orientierung normal zur Prüfstückoberfläche verläuft, bedarf es eines weiteren Prüfdurchlaufes mit um $90^O$ um die Längsachse XX verdrehtem Prüfstück oder einer Hintereinanderschaltung zweier um $90^O$ gegeneinander um die Längsachse XX verdrehter Magnetisierungs-und Prüfstationen. Hierzu geeignete Einrichtungen und Verfahrensweisen finden sich in der vorstehenden Beschreibung in verschiedenen Ausführungsbeispielen der Erfindung.

Im übrigen versteht es sich, dass die resultierende Magnetfeldrichtung nicht unbedingt genau quer zur Prüfstück-Längsachse gerichtet sein muss. Viel mehr kommen auch andere Winkelbereiche in Betracht, sofern damit nach den Gegebenheiten der zu untersuchenden Prüfstücke Längsrisse mit ausreichender Empfindlichkeit und Genauigkeit feststellbar sind. Erfahrungsgemäss kann der Winkel gegebenenfalls in Grenzen zwischen etwa $20^O$ und $90^O$

bezüglich der Prüfstück-Längsachse liegen, wird jedoch vorzugsweise in einem Bereich zwischen $45^O$ und $90^O$ gehalten. Demgemäss

kommen gegebenenfalls sogar noch weitergehend vereinfachte Anordnungen mit nur einer das Prüfstück umgreifenden, unter einem geeigneten Winkel zur Prüfstück-Längsachse angeordneter Spule in Betracht.

0090190

Patentansprüche

1.  Verfahren zur magnetischen Detektion von oberflächennahen
    Materialfehlern an insbesondere stabförmigen Prüfstücken,
    gekennzeichnet durch die Komibination folgender Verfahrensschritte:

    a) In ein Prüfstück wird durch Joch- oder Induktionsmagnetisierung ein äusserer Magnetfluss eingekoppelt, der
       im Bereich der Prüfstückoberfläche mindestens eine quer
       zur Durchlauf- bzw. Stablängsrichtung sowie vorzugsweise mindestens annähernd parallel zur Prüfstückoberfläche gerichtete Komponente aufweist;

    b) Die Prüfstückoberfläche wird wenigstens abschnittsweise
       mit einem trockenmagnetpulverhaltigen Streufluss-
       Markiermittel beschichtet:

    c) Die Prüfstückoberfläche wird wenigstens abschnittsweise
       mit einem Selektionsmittel, insbesondere einem Luftstrom,
       zur Entfernung des in streuflussfreien oder streuflussarmen Oberflächenbereichen befindlichen Markiermittels
       beaufschlagt.

2.  Verfahren nach Anspruch 1, dadurch gekennzeichnet, dass jeweils in einem Durchlauf des Prüfstückes ein Teilbereich des Prüfstückumfanges mit einem im wesentlichen oberflächennahen Magnetfluss beaufschlagt und mit dem magnetpulverhaltigen Markiermittel beschichtet sowie anschliessend mit dem Selektionsmittel beaufschlagt wird.

3.  Verfahren nach Anspruch 2, dadurch gekennzeichnet, dass jeweils ein Prüfstück in mindestens zwei aufeinanderfolgenden Durchläufen mit zwischengeschalteter Teildrehung um eine zur Durchlaufrichtung im wesentlichen parallele Längsachse je einer Teilumfangs-Streuflussdetektion mit Markier- und Selektionsmittelbeaufschlagung unterzogen wird.

4.  Verfahren zur magnetischen Detektion von oberflächennahen Materialfehlern, insbesondere im Durchlaufbetrieb, nach einem der vorangehenden Ansprüche, gekennzeichnet durch die Kombination folgender Verfahrensschritte:

    a) In einem Prüfstück wird ein wenigstens abschnittsweise oberflächennaher und im wesentlichen parallel zur Prüfstückoberfläche verlaufender Magnetfluss erzeugt;

    b) Die Prüfstückoberfläche wird wenigstens abschnittsweise mit einem Trockenmagnetpulver als Streufluss-Markiermittel beschichtet;

c) Die Prüfstückoberfläche wird wenigstens abschnittsweise mit einem Selektionsmittel zur Entfernung des
in streuflussfreien oder streuflussarmen Oberflächenbereichen befindlichen Markiermittels beaufschlagt;

d) Die nach der Selektion verbleibenden Fehlermarkierungen werden lage- und/oder formgerecht auf ein Abbildungsmedium übertragen.

5. Verfahren nach Anspruch 4, dadurch gekennzeichnet, dass
unter Verwendung eines bezüglich der freien Prüfstückoberfläche kontrastierend reflektionsfähigen oder strahlungsaktiven Markiermittels eine fotoelektrische oder
fotographische Abbildung der nach der Selektion verbleibenden Fehlermarkierungen durchgeführt wird.

6. Verfahren nach Anspruch 5, dadurch gekennzeichnet, dass
eine fotoelektrische Abtastung der nach der Selektion
verbleibenden Fehlermarkierungen mit Umsetzung in lage-
und/oder formgerechte Datensignale sowie mit anschliessender Speicherung dieser Signale durchgeführt wird.

7. Verfahren nach einem der Ansprüche 4 bis 6, dadurch gekennzeichnet, dass das Markiermittel nach der Fehlermarkierungs-Abbildung wenigstens annähernd vollständig
von der Prüfstückoberfläche entfernt wird.

0090190

8. Verfahren nach einem der Ansprüche 4 bis 7, dadurch gekennzeichnet, dass ein bindemittel- und/oder fixiermittelfreies Trockenmagnetpulver als Markiermittel verwendet wird.

9. Verfahren nach einem der Ansprüche 4 bis 8, insbesondere nach Anspruch 8, gekennzeichnet durch die Verwendung eines bis zu einer Temperatur von über 200 $^\circ$ C, vorzugsweise bis 500 $^\circ$ C oder darüber temperaturbeständigen Trockenmagnetpulvers als Markiermittel.

10. Verfahren nach Anspruch 9, gekennzeichnet durch die Anwendung auf stab- oder plattenförmiges Prüfgut, insbesondere Walzgut im Anschluss an den Ausgang einer Warmwalz- oder Stranggusseinrichtung.

11. Verfahren zur magnetischen Detektion von oberflächennahen Materialfehlern, insbesondere im Durchlaufbetrieb nach einem oder mehreren der vorangehenden Ansprüche, gekennzeichnet durch die Kombination folgender Verfahrensschritte:

a) In einem Prüfstück wird ein wenigstens abschnittsweise oberflächennaher und im wesentlichen parallel zur Prüfstückoberfläche verlaufender Magnetfluss erzeugt;

0090190

b) An den fehlerbehafteten Oberflächenbereichen wird
   eine Streufluss-Primärmarkierung mit einem Trockenmagnetpulver durchgeführt;

c) Die Trockenmagnetpulver-Primärmarkierungen an der
   Prüfstückoberfläche werden lage- und/oder formgerecht
   auf einen Datenträger abgebildet;

d) In Abhängigkeit von den Lage- und Formdaten der
   Fehlermarkierungen im Datenträger wird eine wenigstens
   teilweise lage- und/oder formgerechte, optisch von der
   freien Prüfstückoberfläche kontrastierende oder strahlungsaktive Sekundärmarkierung der fehlerbehafteten
   Oberflächenbereiche des Prüfstücks durchgeführt.

12. Verfahren nach Anspruch 11, dadurch gekennzeichnet, dass
    eine bleibende Markierung der Fehlerbereiche durch in Abhängigkeit von den Lage- bzw. Form-Fehlerdaten gesteuerte
    Aufbringung eines flüssigen Markiermittels, insbesondere
    einer optisch kontrastierenden oder strahlungsaktiven
    Markierfarbe, durchgeführt wird.

13. Verfahren nach Anspruch 12, gekennzeichnet durch die Verwendung einer wasser- und/oder äthanolhaltigen Markierfarbe.

14. Verfahren nach Anspruch 12 oder 13, dadurch gekennzeichnet, dass im Anschluss an die Flüssigfarbmarkierung der
Fehlerbereiche eine Trocknung mit Aufheizung und/oder
Beaufschlagung durch ein gasförmiges Trocknungsmittel
durchgeführt wird.

15. Verfahren nach einem der Ansprüche 11 bis 14, dadurch
gekennzeichnet, dass eine datengesteuerte, bleibende
Fehlerbereichsmarkierung mit Ausweitung der Markierungsfläche innerhalb jeweils vorgegebener geometrischer
Flächenbegrenzungen durchgeführt wird.

16. Verfahren nach einem der Ansprüche 4 bis 15, dadurch gekennzeichnet, dass unter Verwendung eines Trockenmagnetpulvers zur Fehlermarkierung im Anschluss an die Abbildung der Fehlerbereiche bzw. an die Fehlerdatenerfassung
eine Rückführung des Markiermittels zur erneuten Verwendung für die Beschichtung der Prüfstückoberfläche, gegebenenfalls nach einer Wiederaufbereitung, durchgeführt
wird.

17. Verfahren zur magnetischen Detektion von oberflächennahen Materialfehlern, insbesondere im Durchlaufbetrieb
nach einem der vorangehenden Ansprüche, gekennzeichnet
durch die Kombination folgender Verfahrensschritte:

0090190

a) In dem Prüfstück wird ein wenigstens abschnittsweise oberflächennaher und im wesentlichen parallel zur Prüfstückoberfläche verlaufender Magnetfluss erzeugt;

b) Die Prüfstückoberfläche wird wenigstens abschnittsweise mit einem vorzugsweise magnetpulverhaltigen Streufluss-Markiermittel beschichtet;

c) Die Prüfstückoberfläche wird wenigstens abschnittsweise mit einem Selektionsmittel zur Entfernung des in streuflussfreien oder streuflussarmen Oberflächenbereichen befindlichen Markiermittels beaufschlagt.

d) Die nach der Selektion verbleibenden Fehlermarkierungen werden lage- und/oder formgerecht auf ein Abbildungsmedium übertragen;

e) Es wird eine örtlich selektive Fixierung der Fehlermarkierungen durch gesteuerte Zuführung eines Fixiermittels in Abhängigkeit von aus dem Abbildungsmedium gewonnenen Fehlerlage- bzw. Fehlerformdaten durchgeführt.

18. Verfahren nach Anspruch 17, gekennzeichnet durch Verwendung eines Trocken-Magnetpulvers für die Streufluss-Fehlermarkierung.

0090190

19. Verfahren nach einem oder mehreren der vorangehenden Ansprüche, unter Verwendung eines magnetpulverhaltigen Markiermittels für die Streufluss-Markierung, dadurch gekennzeichnet, dass ein Markiermittel mit einem thermisch zu einer Verflüssigungs- und/oder Verfestigungsreaktion aktivierbaren Bestandteil, insbesondere einem reaktionsfähigen Mehrkomponentenbestandteil, verwendet wird.

20. Verfahren nach Anspruch 19, dadurch gekennzeichnet, dass eine vorzugsweise örtlich selektiv entsprechend der Fehlerverteilung gesteuerte Strahlungsaufheizung der Prüfstückoberfläche zur Fixierung der Fehlermarkierungen durchgeführt wird.

21. Verfahren nach einem oder mehreren der vorangehenden Ansprüche, insbesondere nach Anspruch 15, dadurch gekennzeichnet, dass fehlerbehaftete Oberflächenbereiche des Prüfstücks durch Streuflussdetektion mit einer vorzugsweise magnetpulverhaltigen, insbesondere trockenmagnetpulverhaltigen Primärmarkierung versehen werden und dass diese Fehlerbereiche danach unter flächenhafter Ueberdeckung der Primärmarkierungen mit Sekundärmarkierungen versehen werden.

22. Verfahren nach Anspruch 21, dadurch gekennzeichnet, dass die Flächenbereiche der Primärmarkierungen nach dem Aufbringen der überdeckenden Sekundärmarkierungen wenigstens teilweise selektiv markiert, insbesondere freigelegt werden.

23. Einrichtung zur Durchführung des Verfahrens nach einem der vorangehenden Ansprüche mit Trockenmagnetpulver-Streuflussdetektion, für stabförmige Prüfstücke, dadurch gekennzeichnet, dass eine mit den Prüfstücken in magnetische Kopplung tretende Magnetjoch- oder Induktionsleiteranordnung (MP, SPL, SPL1, SPL2) mit im wesentlichen quer zur Stablängsrichtung verlaufendem Magnetfluss vorgesehen ist.

24. Einrichtung nach Anspruch 23, dadurch gekennzeichnet, dass die Magnetjoch- bzw. Induktionsleiteranordnung (MP, SPL, SPL1, SPL2) mit einer magnetischen Wechselfluss-Erregereinrichtung verbunden ist.

25. Einrichtung nach Anspruch 23 oder 24, für langgestreckte Prüfstücke, dadurch gekennzeichnet, dass mindestens eine mit dem Prüfstück magnetisch gekoppelte Induktionsleiteranordnung (SPL1, SPL2) mit einem Magnetfluss (M1, M2) von wenigstens annähernd zeitkonstanter, räumlicher Richtung bezüglich der Prüfstück-Längsachse (XX) vorgesehen ist und dass der Winkel zwischen dem Magnetfluss (M1, M2) und der Prüfstück-Längsachse (XX) zwischen etwa $20^{\circ}$ und $90^{\circ}$,

0090190

vorzugsweise zwischen 45° und 90°, beträgt.

26. Einrichtung nach Anspruch 25, dadurch gekennzeichnet, dass der Magnetfluss wenigstens im Bereich der Prüfstückoberfläche mindestens annähernd quer zur Prüfstück-Längsachse (XX) verläuft.

27. Einrichtung nach Anspruch 25 oder 26, dadurch gekennzeichnet, dass die Induktionsleiteranordnung (SPL1) als das Prüfstück umgreifende Kreuzspulanordnung ausgebildet ist und dass die zueinander über Kreuz angeordneten Spulen (SPa, SPb) mit wenigstens annähernd gleichphasigen Wechselstromdurchflutungen beaufschlagt sind.

28. Einrichtung nach Anspruch 26, dadurch gekennzeichnet, dass die Induktionsleiteranordnung (SPL2) wenigstens einen sich mindestens annähernd parallel zur Prüfstück-Längsachse (XX) erstreckenden Induktionsleiter (IL1 - IL4) aufweist.

29. Einrichtung nach Anspruch 28, dadurch gekennzeichnet, dass die Induktionsleiteranordnung (SPL2) eine Mehrzahl von mindestens abschnittsweise zueinander und zur Prüfstück-Längsachse (XX) wenigstens annähernd parallel verlaufenden und in Richtung des Prüfstückumfanges mit gegenseitigem Abstand angeordneten, mit gleichsinnigen Stromdurchflutungen beaufschlagten Induktionsleitern (IL1 - IL4) aufweist.

30. Einrichtung nach Anspruch 29, für Prüfstücke mit Mehrkantquerschnitt, dadurch gekennzeichnet, dass jeweils im Bereich mindestens einer Prüfstück-Längskante ein Induktionsleiter (IL1, IL4) angeordnet ist.

31. Einrichtung nach Anspruch 29 oder 30, für Prüfstücke mit Mehrkantquerschnitt, dadurch gekennzeichnet, dass jeweils mindestens im Bereich einer Prüfstück-Längsfläche wenigstens ein Induktionsleiter (IL2, IL3) angeordnet ist.

32. Einrichtung nach einem der Ansprüche 23 bis 31, dadurch gekennzeichnet, dass eine Repetier-Durchlaufeinrichtung für den wiederholten Durchlauf je eines Prüfstückes durch den Magnetisierungs- und/oder Streufluss-Detektionsbereich sowie eine Drehvorrichtung für das Verdrehen jeweils eines Prüfstücks um die Stablängsachse mit vorgegebenem Drehwinkel vorgesehen ist.

33. Einrichtung nach Anspruch 32, dadurch gekennzeichnet, dass für die Fehlererfassung in unterschiedlichen Umfangswinkelbereichen des Prüfstücks im Durchlaufbetrieb mindestens zwei Folgestationen mit Magnetisierungs-, Detektions- und/oder Fehlermarkiereinrichtung vorgesehen sind.

34. Einrichtung nach Anspruch 33, dadurch gekennzeichnet,
dass jeweils zwischen zwei Folgestationen eine Dreheinrichtung für das Verdrehen eines Prüfstücks um eine
im wesentlichen parallel zur Durchlaufrichtung gerichtete Längsachse mit vorgegebenem Drehwinkel vorgesehen
ist.

35. Einrichtung nach Anspruch 33, dadurch gekennzeichnet,
dass für eine im wesentlichen drehfreie Durchlaufprüfung je eines Prüfstücks mindestens zwei Folgestationen
mit bezüglich Längsachse um einen vorgegebenen Winkel
verdreht angeordneten Magnetisierungs-, Detektions- und/
oder Markiereinrichtung vorgesehen sind.

Fig.1a

Fig.1

P781 7/1

Fig.2

0090190

Fig.3

Fig.3a

P781 7/3

Fig.4

Fig.4a

LMP

L

SMM

SM

MS

MF

MD

K

Fig 5

0090190

*Fig.6*

*Fig. 7*

P781  7/6

K

X

SPa

SPL1

SPb

Mb

M1

Ma

X

**Fig.8**

SPa

SPb

M1

SPL1

K

XX

**Fig.9**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | DE-A-2 114 000 (TOKUSHU TORYO)<br><br>* Seite 5, letzter Absatz - Seite 8, Absatz 2 *<br>--- | 1,2,4, 10,11, 17,23- 26,30, 31 | G 01 N 27/84 |
| Y | US-A-3 844 451 (P.J. PARKER)<br><br>* Seite 1 *<br>--- | 1,4,8, 9,11, 16,18, 21 | |
| Y | US-A-3 614 604 (K. REINSHAGEN)<br><br><br>* Seite 1 *<br>--- | 1,4,7, 8,11, 12,14, 17,18, 21 | RECHERCHIERTE SACHGEBIETE (Int. Cl. ³) |
| A | CH-A- 599 547 (MECAFINA)<br>* Spalte 8; Anspruch *<br>--- | 1 | G 01 N 27/84 |
| A | US-A-3 988 530 (Y. IKEGAMI et al.)<br>* Seite 1 *<br>--- | 1 | |
| A | FR-A-1 512 541 (I.R.S.I.D.)<br>* Seite 5, Zusammenfassung *<br>--- -/- | 1 | |

Der vorliegende Recherchenbericht wurde für alle Patentansprüche erstellt.

| Recherchenort<br>DEN HAAG | Abschlußdatum der Recherche<br>15-07-1983 | Prüfer<br>DUCHATELLIER M.A. |
|---|---|---|

Europäisches
Patentamt

0090190

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | DE-A-2 451 199 (KLÖCKNER-WERKE)<br>* Seite 11, Anspruch 1 *<br><br>--- | 1,32 | |
| A | GB-A-1 029 180 (MAGNAFLUX)<br>* Seite 9, Anspruch 1 *<br><br>--- | 1,32 | |
| A | GB-A- 923 932 (MAGNAFLUX)<br>* Seite 5, Anspruch 1 *<br><br>--- | 1 | |
| A | US-A-3 855 530 (T. FUJIN et al.)<br>* Seite 1 *<br><br>----- | 1,27 | |

RECHERCHIERTE
SACHGEBIETE (Int. Cl. 3)

Der vorliegende Recherchenbericht wurde für alle Patentansprüche erstellt.

| Recherchenort<br>DEN HAAG | Abschlußdatum der Recherche<br>15-07-1983 | Prüfer<br>DUCHATELLIER M.A. |
|---|---|---|